Europäisches Patentamt

European Patent Office

Office européen des brevets

(19)

(11) **EP 0 796 421 B1**

(12) **FASCICULE DE BREVET EUROPEEN**

(45) Date de publication et mention
de la délivrance du brevet:
**13.10.1999 Bulletin 1999/41**

(21) Numéro de dépôt: 95908303.1

(22) Date de dépôt: **02.02.1995**

(51) Int Cl.⁶: **G01D 3/02**, G01D 1/02,
G01F 23/00

(86) Numéro de dépôt international:
**PCT/FR95/00128**

(87) Numéro de publication internationale:
**WO 95/21368 (10.08.1995 Gazette 1995/34)**

(54) **DISPOSITIF DE FILTRAGE, NOTAMMENT POUR JAUGE DE CARBURANT SUR VEHICULE AUTOMOBILE**

FILTERVORRICHTUNG, INSBESONDERE FÜR DIE KRAFTSTOFFANZEIGE IN AUTOMOBILEN

FILTERING DEVICE PARTICULARLY FOR A FUEL GAUGE OF A MOTOR VEHICLE

(84) Etats contractants désignés:
**DE ES GB IT**

(30) Priorité: **03.02.1994 FR 9401218**

(43) Date de publication de la demande:
**24.09.1997 Bulletin 1997/39**

(73) Titulaires:
• **MARWAL SYSTEMS**
**F-92000 Nanterre (FR)**
• **MAGNETI MARELLI FRANCE**
**92000 Nanterre (FR)**

(72) Inventeurs:
• **MARTEAU, Bernard**
**F-91430 Igny (FR)**
• **PHILIPPON, Xavier**
**F-78180 Montigny-le-Bretonneux (FR)**

(74) Mandataire: **Texier, Christian et al**
**Cabinet Regimbeau,**
**26, Avenue Kléber**
**75116 Paris (FR)**

(56) Documents cités:
EP-A- 0 234 154          EP-A- 0 612 982
WO-A-93/13392          FR-A- 2 595 818
US-A- 3 976 860

## Description

La présente invention concerne le domaine des dispositifs de filtrage de signaux électriques, conçus pour éliminer les perturbations parasites superposées à la partie utile de ces signaux.

La présente invention s'applique notamment, mais non exclusivement, au filtrage des signaux électriques générés par des capteurs de niveau de liquides contenus dans des réservoirs de véhicules automobiles, par exemple le niveau de carburant.

On a déjà proposé de nombreux dispositifs de filtrage de signaux électriques.

Cependant les dispositifs jusqu'ici proposés ne donnent pas totalement satisfaction, en particulier pour le filtrage des signaux issus de capteurs de niveaux installés sur véhicules automobiles, en raison des fortes perturbations de ces niveaux résultant des accélérations et des forces qui s'exercent sur ces véhicules et par conséquent sur les liquides qu'ils contiennent.

La présente invention a maintenant pour but de perfectionner les dispositifs de filtrage existants.

Ce but est atteint dans le cadre de la présente invention grâce à un dispositif de filtrage piloté par des moyens de commande qui comprennent :

- des moyens de détection aptes à détecter les croisements entre le signal d'entrée et une valeur filtrée de ce signal d'entrée,
- des moyens de temporisation relancés à chaque croisement décelé par les moyens de détection,
- des moyens de blocage du filtre si aucun croisement n'est décelé par les moyens de détection avant la fin de la temporisation, et de déblocage du filtre lors du premier croisement décelé par les moyens de détection après blocage du filtre.

Selon une autre caractéristique avantageuse de la présente invention le dispositif comprend un dispositif de filtrage numérique.

Selon une autre caractéristique avantageuse de la présente invention, les moyens de blocage comprennent des moyens aptes à modifier la constante de temps du filtre.

D'autres caractéristiques, buts et avantages de la présente invention apparaîtront à la lecture de la description détaillée qui va suivre, et en regard des dessins annexés donnés à titre d'exemples non limitatifs et sur lesquels :

- la figure 1 représente un mode de réalisation préférentiel d'un filtre conforme à la présente invention, et
- la figure 2 illustre schématiquement le niveau réel d'un liquide dans un réservoir, le signal d'entrée appliqué au filtre, issu d'un capteur et le niveau filtré en sortie de ce filtre.

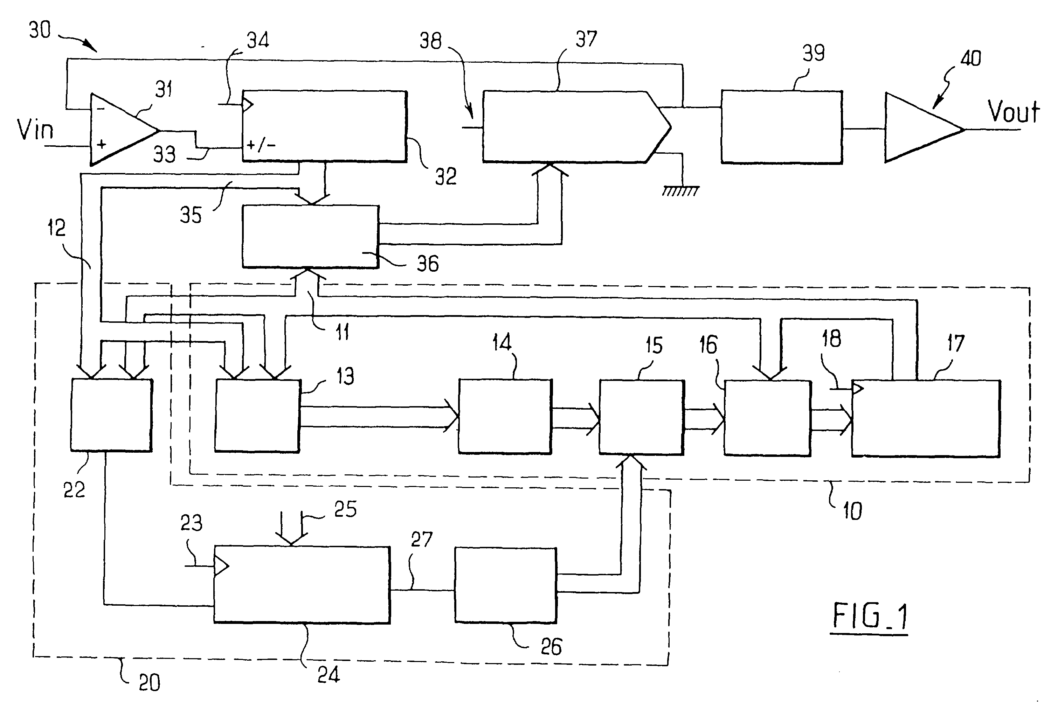

Le circuit de filtrage représenté sur la figure 1 annexée comprend essentiellement un module de filtrage 10, un module de commande 20 et un module 30 de conversion analogique/numérique et numérique/analogique

Le module de conversion 30 comprend un comparateur 31, un compteur 32, un multiplexeur 36, un convertisseur numérique analogique 37 et un échantillonneur bloqueur 39.

Le comparateur 31 reçoit sur une première entrée le signal analogique d'entrée Vin. Ce comparateur 31 reçoit sur sa seconde entrée le signal de sortie analogique disponible sur le convertisseur numérique/analogique 37. La sortie 33 du comparateur 31 est reliée à l'entrée de comptage/décomptage du compteur 32. Celui-ci reçoit par ailleurs sur son entrée 34 un signal d'horloge à fréquence constante.

La sortie 35 numérique du compteur 32 est reliée à une première entrée du multiplexeur 36. Comme on l'expliquera par la suite, la sortie numérique 35 du compteur 32 est également reliée à l'entrée du module de filtrage 10 et du module de commande 20. La sortie du multiplexeur 36 est reliée à l'entrée du convertisseur numérique/analogique 37, lequel reçoit sur son entrée 38 un signal de référence. La sortie du convertisseur 37 est reliée en plus de la seconde entrée du comparateur 30, à l'entrée de l'échantillonneur bloqueur 39. Le cas échéant, la sortie de celui-ci peut être reliée à l'entrée d'un amplificateur 40. Le signal analogique filtré est ainsi disponible sur la sortie de l'amplificateur 40 sous la référence Vout sur la figure 15.

Le module de filtrage 10 reçoit sur son entrée 12 le signal numérique d'entrée issue de la sortie 35 du compteur 32 et fournit sur sa sortie 11 reliée à la seconde entrée du multiplexeur 36, un signal correspondant filtré.

Le module 10 peut bien entendu faire l'objet de nombreuses variantes de réalisation.

Dans le cadre d'applications à la mesure du niveau d'un liquide dans un réservoir de véhicule automobile, par exemple un réservoir de carburant, un module de filtrage 10 du premier ordre suffit à éliminer correctement les variations périodiques du signal d'entrée (typiquement 0,3 à 1Hz) liées aux mouvements classiques du véhicule.

Cependant, dans des conditions de conduite exceptionnelles, par exemple dans le cas d'un virage, d'une montée ou d'une descente prolongée, le niveau de liquide apparent mesuré par le capteur peut varier de manière importante et erronée et ce pendant plusieurs dizaines de secondes.

La combinaison des modules 10 et 20 représentée sur la figure 1 a pour but de rejeter les valeurs erronées ainsi mesurées.

Pour cela, comme on l'a indiqué précédemment, le module 10 est associé à des moyens de commande 20, lesquels comprennent :

- des moyens 22 de détection aptes à détecter les croisements entre le signal d'entrée appliqué sur l'entrée 12 et une valeur filtrée de ce signal d'entrée obtenue sur la sortie 11,
- des moyens 24 de temporisation relancés à chaque croisement décelés par les moyens de détection 22, et
- des moyens 26 de blocage du module 10 si aucun croisement n'est décelé par les moyens de détection 22 avant la fin de la temporisation et de déblocage de ce filtre 10 lors du premier croisement décelé par les moyens de détection 22 après blocage du filtre 10.

Comme indiqué précédemment, l'ensemble de filtrage 10 peut faire l'objet de nombreuses variantes de réalisation.

Selon le mode de réalisation particulier représenté sur la figure 1, ces moyens 10 sont constitués d'un filtre du premier ordre qui assure la fonction de filtrage suivante :

$\text{filtre}_n = \text{filtre}_{n-1} + \text{Mniv} \cdot (\text{NIV}_n - \text{filtre}_{n-1})/P$, relation dans laquelle :

$\text{filtre}_n$ représente le signal filtré disponible à l'instant n sur la sortie 11 des moyens de filtrage 10,

$\text{filtre}_{n-1}$ représente le même signal disponible à l'instant n-1 sur la sortie 11 des moyens de filtrage 10,

Mniv représente un facteur multiplicatif,

$\text{NIV}_n$ représente le signal appliqué sur l'entrée 12 des moyens de filtrage 10, c'est-à-dire le signal mesuré disponible à la sortie 35 du compteur 32 et P représente une constante de temps, par exemple P = $2^{14}\tau$, $\tau$ étant la période de l'horloge du filtre.

Plus précisément, les moyens de filtrage 10 illutrés sur la figure 1 comprennent :

- un soustracteur 13 qui calcule $\text{NIV}_n - \text{filtre}_{n-1}$ en retranchant du signal disponible sur la sortie 35 du compteur 32, la valeur du signal disponible sur la sortie d'un registre 17, laquelle sortie correspond également à la sortie 11 des moyens de filtrage 10 appliquée au multiplexeur 36,
- un diviseur 14 qui divise le signal de sortie du soustracteur 13 par la constante de temps P,
- un multiplicateur 15 qui multiplie le signal de sortie du multiplicateur 14 par le facteur multiplicatif Mniv,
- un additionneur 16 qui additionne la valeur $\text{filtre}_{n-1}$ prélevée sur la sortie du registre 17 au signal issu du multiplicateur 15, et enfin
- le registre 17 précité.

Celui-ci est cadencé par un signal d'horloge appliqué sur son entrée 18.

La valeur filtrée $\text{filtre}_n$ disponible sur la sortie de l'additionneur 16 rafraîchit ainsi périodiquement la valeur mémorisée dans le registre 17 et appliquée au multiplexeur 36.

A chaque détection d'un croisement entre le signal d'entrée $\text{NIV}_n$ disponible sur la sortie 35 du compteur 32 et la valeur filtrée de ce signal d'entrée $\text{filtre}_{n-1}$ disponible sur la sortie du registre 17, la sortie des moyens de détection 22 initie les moyens de temporisation 24. Pour cela, de préférence les moyens de temporisation 24 sont formés d'un décompteur lequel est chargé à une valeur prédéterminée représentative de la temporisation recherchée, appliqué sur son entrée 25, à chaque croisement décelé par les moyens de détection 22. Le contenu du compteur 24 est alors décrémenté au rythme d'un signal d'horloge appliqué sur l'entrée 23.

La temporisation ainsi définie par le compteur 24 peut être par exemple de 1 à 2 secondes.

Lorsque la sortie 27 du compteur 26 atteint zéro, c'est-à-dire qu'aucun croisement n'est détecté pendant la temporisation, les moyens de blocage 26 sont validés pour intervenir sur les moyens de filtrage 10 afin de bloquer ceux-ci.

En revanche, si un croisement intervient avant la fin de la temporisation, celle-ci est relancée.

Par ailleurs, le filtre 10 est débloqué lorsqu'un croisement est à nouveau détecté par les moyens 22.

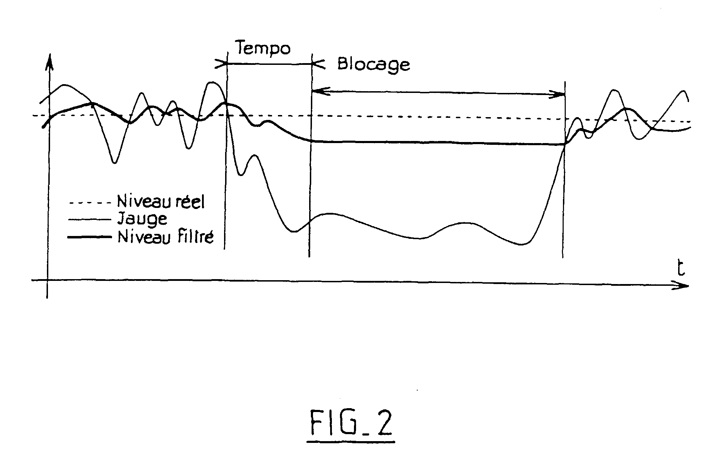

Le fonctionnement de ce dispositif est illustré sur la figure 2.

Les moyens de blocage 26 peuvent agir sur le filtre 10 pour verrouiller celui-ci, c'est-à-dire pour maintenir en sortie de ce filtre 10 la valeur présente au moment du blocage, soit à la fin de la temporisation.

Cependant, selon une première caractéristique additionnelle préférentielle de l'invention, les moyens de blocage 26 sont adaptés non pas pour verrouiller le filtre 10, mais pour modifier la constante de temps de ce dernier, en allongeant cette constante de temps, par exemple dans un rapport 16.

Plus précisément, de préférence, lorsqu'aucun croisement n'est détecté par les moyens 22 pendant la temporisation générée par le compteur 24, les moyens de blocage 26 agissent sur le multiplicateur 15 afin d'allonger la constante de temps du filtrage.

Les évolutions de la valeur filtrée obtenues sur la sortie du registre 17 deviennent alors très faibles sans être totalement nulles.

Pour cela, les moyens 26 peuvent imposer par exemple un coefficient multiplicateur Mniv = 1, pendant la période de blocage du filtre 10. Le filtrage redevient normal au premier croisement détecté par les moyens 22 consécutif à ce blocage. Les moyens 26 réappliquent alors sur le multiplicateur 15 un coefficient multiplicateur Mniv compatible avec une constante de temps plus courte.

A titre d'exemple non limitatif le coefficient multiplicateur Mniv appliqué par les moyens 26 sur le multiplicateur 15 peut être compris, en dehors des périodes de blocage, entre 16 et 32, et défini sur la base d'une relation qui sera précisée par la suite.

A titre d'exemple non limitatif, la constante de temps du filtre 10 en mode normal peut être de l'ordre de 30 secondes et en mode bloqué de l'ordre de 8 minutes.

L'homme de l'art comprendra aisément qu'il est avantageux d'augmenter notablement la constante du filtre dans la période dite de blocage, et non point de verrouiller totalement celui-ci. En effet, cette disposition permet de rallier toujours la valeur réelle du signal d'entrée, même en cas d'erreur temporaire. Par exemple en cas de défaut d'initialisation du système, lié à un démarrage en pente, la valeur mesurée au départ est fausse. Si l'on bloque complètement le filtre 10 lors du premier croisement on risque de ne jamais rallier la valeur réelle une fois le véhicule revenu à une assiette normale. En revanche, ralentir le filtre 10 en augmentant sa constante de temps permet de s'affranchir totalement de cette difficulté.

Selon une seconde caractéristique additionnelle avantageuse de l'invention, il est proposé, au démarrage, c'est-à-dire lors de l'apparition de l'alimentation sur le circuit, d'imposer un mode intermédiaire où le blocage (augmentation de la constante de temps) des moyens de filtrage 10 est interdit tant qu'un nombre de croisements prédéterminés n'a pas été détecté par les moyens 22. Pour cela, les moyens 26 sont inhibés tant que ce nombre de croisements n'est pas atteint.

Cette disposition permet d'éviter que le système ne soit initialisé à une valeur erronée transmise par le capteur Ca liée par exemple à un stationnement en position inclinée du véhicule (tel qu'un stationnement sur trottoir).

En effet, dans un tel cas, le niveau de carburant varie brutalement dès que le véhicule est déplacé. Par conséquent, si l'on passe immédiatement en mode normal, le système détecte une variation apparente importante mais erronée du niveau. Aucun croisement n'est détecté pendant la temporisation. Le système passe alors en mode bloqué. En l'absence du mode intermédiaire imposé de préférence dans le cadre de l'invention, le système mettrait alors un temps très long à rallier la bonne valeur.

Il faut noter que pour le circuit, l'égalité permanente entre la valeur mesurée issue du compteur 32 et la valeur filtrée issue du registre 17, déterminée par les moyens de détection 22, est considérée comme un seul et même croisement.

Selon une troisième caractéristique additionnelle avantageuse de l'invention, le circuit représenté sur la figure 1 comprend un élément non linéaire. Cet élément non linéaire est adapté pour compenser la non linéarité de l'ensemble comprenant le capteur connecté en amont du circuit de filtrage et le dispositif indicateur connecté en aval de ce circuit.

En effet, la plupart des ensembles de jaugeage de niveau de carburant et indicateurs logométriques utilisés sur véhicules automobiles, ne sont pas linéaires.

Si le filtrage est lui linéaire, la réponse du système varie en fonction de la valeur mesurée.

Deux moyens de compensation de cette non linéarité peuvent être envisagés.

Le premier moyen consiste à utiliser un convertisseur analogique/numérique 37 non linéaire, pour obtenir un nombre constant de pas par degré, alors qu'avec un convertisseur linéaire on a un nombre constant de pas par ohm. La courbe de réponse de ce convertisseur 37 doit dans ce cas répondre autant que possible à l'inverse de la courbe capteur Ca/indicateur B1-B2.

Le second moyen de compensation consiste à faire varier la constante de temps du filtre 10 en fonction de la réponse de l'ensemble capteur /indicateur. Plus précisément, ce type de correction peut être réalisé à l'aide d'un opérateur de multiplication dans le filtrage obtenu par les moyens 10.

Pour cela, on peut par exemple prévoir un facteur multiplicatif Mniv de la forme :

$16.(2.NIV_{max} - NIV_n/NIV_{max})$, relation dans laquelle $NIV_{max}$ représente l'amplitude maximale du signal disponible sur la sortie 35 du compteur 32.

Le multiplexeur 36 a pour fonction d'appliquer sur l'entrée du convertisseur 37 alternativement le signal issu de la sortie 35 du compteur/décompteur 32 ou le signal issu du filtre 10. Plus précisément, aux instants de comptage/décomptage du compteur 32 le multiplexeur 36 applique sur l'entrée du convertisseur 37 la sortie du compteur/décompteur 32.

En dehors des instants de comptage/décomptage du compteur 32, le multiplexeur 36 peut appliquer sur l'entrée du convertisseur 37 le signal de sortie du filtre 10.

L'utilisation d'un convertisseur 37 unique permet une compensation automatique des défauts éventuels de celui-ci, par exemple non linéarité ou dérive.

Bien entendu la présente invention n'est pas limitée au mode de réalisation particulier qui vient d'être décrit, mais s'étend à toutes variantes conformes à son esprit.

Ainsi si selon le mode de réalisation préférentiel décrit précédemment, le module de filtrage 10 est de type numérique, en variante on peut envisager d'utiliser un module de filtrage de type analogique associé à des moyens de commande adaptés équivalents au module de commande 20 précédemment décrit.

Le dispositif de filtrage conforme à la présente invention peut trouver notamment application dans un circuit de traitement du signal de sortie d'un capteur analogique résistif, par exemple un capteur de niveau, comprenant d'une part un moyen de filtrage numérique et d'autre part un module formant convertisseur numérique/impédance intercalés en série entre la sortie du capteur et l'entrée d'une charge associée, par exemple un indicateur logométrique, ledit convertisseur numérique/impédance présentant une impédance de sortie variable et fonction du signal de sortie du moyen de filtrage numérique, qui est équivalente à la résistance de sortie du capteur.

Un tel circuit de traitement est décrit dans la demande de brevet français déposée sous le N°93 02217 ainsi que dans une demande de brevet européen déposée le même jour que la présente demande.

Selon une mise en oeuvre préférentielle, le convertisseur numérique/impédance précité comprend des moyens de mesure de la tension aux bornes de la charge et un étage de sortie du type source de courant commandé pour délivrer un courant proportionnel au rapport entre la tension mesurée aux bornes de la charge et la résistance de sortie du capteur.

## Revendications

1. Dispositif de filtrage d'un signal électrique, caractérisé par le fait qu'il comprend un module de filtrage (10) et un module de commande (20) comportant :

   - des moyens (22) de détection aptes à détecter les croisements entre le signal d'entrée et une valeur filtrée de ce signal d'entrée,
   - des moyens (24) de temporisation relancés à chaque croisement décelé par les moyens de détection (22), et
   - des moyens (26) de blocage du module de filtrage (10) si aucun croisement n'est décelé par les moyens de détection (22) avant la fin de la temporisation et de déblocage du module de filtrage (10) lors du premier croisement décelé par les moyens de détection (22) après blocage du module de filtrage.

2. Dispositif selon la revendication 1, caractérisé par le fait que le module de filtrage (10) est un filtre de type numérique.

3. Dispositif selon l'une des revendications 1 ou 2, caractérisé par le fait que le module de filtrage (10) est un filtre du premier ordre.

4. Dispositif selon l'une des revendications 1 à 3, caractérisé par le fait que le module de filtrage numérique (10) est de la forme :

   $$\text{Filtre}_n = \text{Filtre}_{n-1} + \text{Mniv} (\text{NIV}_n - \text{Filtre}_{n-1})/P$$

   relation dans laquelle :

   $\text{Filtre}_n$ désigne la valeur du signal filtré à l'instant n,
   $\text{Filtre}_{n-1}$ désigne la valeur du signal filtré à l'instant n-1,
   Mniv désigne un facteur de multiplication
   $\text{NIV}_n$ désigne la valeur d'entrée mesurée à l'instant n, et

   P désigne la constante de temps.

5. Dispositif selon l'une des revendications 1 à 4, caractérisé par le fait que la temporisation est de l'ordre de 1 à 2 secondes.

6. Dispositif selon l'une des revendications 1 à 5, caractérisé par le fait que les moyens de blocage (26) comprennent des moyens aptes à modifier la constante de temps du module de filtrage (10).

7. Dispositif selon la revendication 6, caractérisé par le fait que les moyens aptes à modifier la constante de temps du module de filtrage (10) sont adaptés pour modifier un facteur multiplicateur (Mniv) de la fonction de filtrage afin d'allonger la constante de temps du filtrage pendant la période de blocage.

8. Dispositif selon l'une des revendications 1 à 7, caractérisé par le fait que le module de filtrage comprend des moyens aptes à inhiber les moyens de blocage (26), après mise en service, tant que les moyens de détection (22) n'ont pas décelé un nombre prédéterminé de croisements entre le signal d'entrée et la valeur filtrée de ce signal d'entrée.

9. Dispositif selon l'une des revendications 1 à 8, caractérisé par le fait qu'il comprend un moyen non linéaire apte à compenser la non-linéarité de l'ensemble capteur/charge associé.

10. Dispositif selon la revendication 9, caractérisé par le fait qu'il comprend un convertisseur analogique/numérique (37) non linéaire.

11. Dispositif selon la revendication 9, caractérisé par le fait qu'il comprend des moyens aptes à modifier la constante de temps du filtre en fonction de la réponse non linéaire de l'ensemble capteur /charge.

12. Dispositif selon la revendication 11, caractérisé par le fait que les moyens de modification de la constante de temps du filtre agissent sur un facteur multiplicatif de la fonction de filtrage.

13. Dispositif selon la revendication 12, caractérisé par le fait que le facteur multiplicatif Mniv de la fonction de filtrage est de la forme : Mniv = 16 (2 - ($\text{NIV}_{max}$ - $\text{NIV}_n$)/$\text{NIV}_{max}$).

14. Application du dispositif conforme à l'une des revendications 1 à 13 au traitement du signal de sortie d'un capteur résistif sur véhicule automobile.

## Patentansprüche

1. Vorrichtung für das Filtern eines elektrischen Signals,
**dadurch gekennzeichnet, daß**
sie ein Filtermodul (20) und ein Steuermodul (20) aufweist, die folgendes enthalten:

- Meßmittel (22) für die Feststellung von Kreuzungen zwischen dem Eingangssignal und einem gefilterten Wert dieses Eingangssignals,
- Mittel (24) für die Verzögerung, die jedesmal dann zugeschaltet werden, wenn die Meßmittel (22) eine Kreuzung festgestellt haben, und
- Mittel (26) für die Blockierung des Filtermoduls (10), wenn die Meßmittel (22) keinerlei Kreuzung vor Beendigung der Verzögerung und der Entriegelung des Filtermoduls (10) während der ersten Kreuzung festgestellt haben, die von den Meßmitteln (22) nach der Blockierung des Filtermoduls festgestellt wurde.

2. Vorrichtung nach Anspruch 1,
**dadurch gekennzeichnet, daß**
das Filtermodul (10) ein digitaler Filtertyp ist.

3. Vorrichtung nach einem der Ansprüche 1 oder 2,
**dadurch gekennzeichnet, daß**
das Filtermodul (10) ein Filter der ersten Größenordnung ist.

4. Vorrichtung nach einem der Ansprüche 1 bis 3,
**dadurch gekennzeichnet, daß**
das digitale Filtermodul (10) folgende Form hat:

$$\text{Filter}_n = \text{Filter}_{n-1} + \text{Mniv} (\text{NIV}_n - \text{Filter}_{n-1})/P$$

in dieser Gleichung bezeichnet:

$\text{Filter}_n$ den Wert des gefilterten Signals im Zeitpunkt n,
$\text{Filter}_{n-1}$ den Wert des gefilterten Signals im Zeitpunkt n-1,
Mniv den Multiplikatorfaktor,
$\text{NIV}_n$ den im Zeitpunkt n gemessenen Eingangswert, und
P die Zeitkonstante.

5. Vorrichtung nach einem der Ansprüche 1 bis 4,
**dadurch gekennzeichnet, daß**
die Verzögerung eine Größenordnung von 1 bis 2 Sekunden hat.

6. Vorrichtung nach einem der Ansprüche 1 bis 5,
**dadurch gekennzeichnet, daß**
die Blockiermittel (26) Mittel enthalten, die geeignet sind, die Zeitkonstante des Filtermoduls (10) zu verändern.

7. Vorrichtung nach Anspruch 6,

**dadurch gekennzeichnet, daß**
die Mittel für die Veränderung der Zeitkonstante des Filtermoduls (10) so ausgelegt sind, daß einen Multiplikatorfaktor (Mniv) der Filterfunktion verändern können, um dadurch die Zeitkonstante der Filterung während der Dauer der Blockierung zu verlängern.

8. Vorrichtung nach einem der Ansprüche 1 bis 7,
**dadurch gekennzeichnet, daß**
das Filtermodul Mittel aufweist, die geeignet sind, nach der Einschaltung die Blockiermittel (26) solange zu verzögern, wie die Meßmittel (22) keine vorbestimmte Anzahl von Kreuzungen zwischen dem Eingangssignal und dem gefilterten Wert dieses Eingangssignals festgestellt haben.

9. Vorrichtung nach einem der Ansprüche 1 bis 8,
**dadurch gekennzeichnet, daß**
sie ein nicht lineares Mittel enthält, das geeignet ist, die mangelnde Linearität der Einheit aus Meßfühler und zugeordneter Last zu kompensieren.

10. Vorrichtung nach Anspruch 9,
**dadurch gekennzeichnet, daß**
sie einen nicht linearen Analog-Digital-Wandler (37) enthält

11. Vorrichtung nach Anspruch 9,
**dadurch gekennzeichnet, daß**
sie Mittel aufweist, die geeignet sind, die Zeitkonstante des Filters je nach der nicht linearen Reaktion der Einheit aus Meßfühler und Last zu verändern.

12. Vorrichtung nach Anspruch 11,
**dadurch gekennzeichnet, daß**
die Mittel für die Veränderung der Zeitkonstante des Filters auf einen Multiplikatorfaktor der Funktion des Filters einwirken.

13. Vorrichtung nach Anspruch 12,
**dadurch gekennzeichnet, daß**
der Multiplikatorfaktor Mniv der Funktion des Filters die folgende Form hat:

$$\text{Mniv} = 16 (2 - (\text{NIV}_{max} - \text{NIV}_n)/\text{NIV}_{max}).$$

14. Verwendung der Vorrichtung nach einem der Ansprüche 1 bis 13 für die Verarbeitung des Ausgangssignals eines resistiven Meßfühlers in einem Kraftfahrzeug.

**Claims**

1. A filter device for filtering an electrical signal, the device being characterized by the fact that it comprises a filter module (10) and a control module (20), the control module comprising:

detector means (22) capable of detecting crossings between the input signal and a value filtered from said input signal;
time-delay means (24) that are reset each time a crossing is detected by the detector means (22); and
means (26) for blocking the filter module (10) if no crossing is detected by the detector means (22) before the end of the time delay, and for unblocking the filter module (10) when the first crossing is detected by the detector means (22) after the filter module has been blocked.

2. A device according to claim 1, characterized by the fact that the filter module (10) is a digital type filter.

3. A device according to claim 1 or 2, characterized by the fact that the filter module (10) is a first-order filter.

4. A device according to any one of claims 1 to 3, characterized by the fact that the filtering of the digital filter module (10) is of the form:

$$\text{Filter}_n = \text{Filter}_{n-1} + \text{Mniv} (\text{NIV}_n - \text{Filter}_{n-1})/P$$

in which relationship:

$\text{Filter}_n$ designates the value of the signal filtered at instant n;
$\text{Filter}_{n-1}$ designates the value of the signal filtered at instant n-1 ;
Mniv designates a multiplication factor;
$\text{NIV}_n$ designates the input value measured at instant n; and
P designates the time constant.

5. A device according to any one of claims 1 to 4, characterized by the fact that the time delay lies in the range 1 second to 2 seconds.

6. A device according to any one of claims 1 to 5, characterized by the fact that the blocking means (26) include means capable of modifying the time constant of the filter module (10).

7. A device according to claim 6, characterized by the fact that the means capable of modifying the time constant of the filter module (10) are adapted to modify a multiplication factor (Mniv) of the filter function so as to extend the filtering time constant during the blocking period.

8. A device according to any one of claims 1 to 7, characterized by the fact that the filter module comprises means capable of inhibiting the blocking means (26), after start-up, until the detector means (22) have detected a predetermined number of crossings between the input signal and the value filtered from said input signal.

9. A device according to any one of claims 1 to 8, characterized by the fact that it includes non-linear means capable of compensating the non-linearity of the associated sensor/load assembly.

10. A device according to claim 9, characterized by the fact that it includes a non-linear analog-to-digital converter (37).

11. A device according to claim 9, characterized by the fact that it includes means capable of modifying the time constant of the filter as a function of the non-linear response of the sensor/load assembly.

12. A device according to claim 11, characterized by the fact that the means for modifying the time constant of the filter act on a multiplication factor of the filter function.

13. A device according to claim 12, characterized by the fact that the multiplication factor Mniv of the filter function is of the form:

$$\text{Mniv} = 16(2 - (\text{NIV}_{max} - \text{NIV}_n)/\text{NIV}_{max}).$$

14. Application of the device according to any one of claims 1 to 13 to processing the output signal of a resistive sensor on a motor vehicle.

FIG_1

Vin

Vout

EP 0 796 421 B1

8

FIG_2